# FASCICULE DE BREVET EUROPEEN

(11) **EP 4 565 833 B1**
(45) Date de publication et mention de la délivrance du brevet: **27.05.2026**
(21) Numéro de dépôt: 23720294.0
(22) Date de dépôt: 19.04.2023
(51) Int. Cl.: F28D 15/02, H01M 10/6552, H01M 10/613, H01M 10/625, H01M 10/647, H01M 10/6556, H01M 10/6557, H01M 10/6567, H01M 10/6568

(54) **ECHANGEUR DE CHALEUR**
WÄRMETAUSCHER
HEAT EXCHANGER

(30) Priorité: 03.08.2022 FR 2208073
(43) Date de publication de la demande: 11.06.2025
(73) Titulaire: Calyos SA, 6040 Jumet (BE)
(72) Inventeur: DUPONT, Vincent, 1160 AUDERGHEM (BE); BILLET, Cyrille, 6230 ROSSEIGNIES (BE); DE RYCKEL, Antoine, 6040 CHARLEROI (BE)
(74) Mandataire: Plasseraud IP
(86) Numéro de dépôt international: PCT/EP2023/060193
(87) Numéro de publication internationale: WO 2024/027962

(56) Documents cités:
- EP-A1- 3 553 445
- CN-Y- 2 770 285
- US-A1- 2006 144 571
- US-A1- 2021 071 963
- US-B1- 9 429 370

## Description

### Domaine technique

La présente description se rapporte à un échangeur de chaleur. La présente description se rapporte également à une batterie comprenant un tel échangeur de chaleur.

### Technique antérieure

Le refroidissement des dispositifs électroniques implique de plus en plus des systèmes de refroidissement à fluide de travail diphasique. Ceux-ci ont une bonne efficacité de transfert de calories, qui plus est, sous un gradient de température faible. Pour ce faire, un évaporateur est placé sur des éléments chauffants, un condenseur est placé sur un dissipateur de chaleur, et un fluide de travail diphasique circule entre l'évaporateur et le condenseur.

Parmi ces systèmes, il est d'abord connu les caloducs. Un caloduc se présente sous la forme d'une enceinte hermétique qui renferme un fluide diphasique, i.e. sous forme liquide et gazeuse. Une extrémité du caloduc est située près des éléments chauffants (on nomme communément cette extrémité « évaporateur » et l'élément à refroidir « source chaude »). Au niveau de l'évaporateur, le fluide à l'état liquide se vaporise en absorbant de l'énergie thermique émise par la source chaude. La vapeur circule alors dans le caloduc jusqu'à l'autre extrémité (communément nommée condenseur) située au niveau d'un dissipateur de chaleur (communément nommée « source froide ») où elle se condense pour retourner à l'état liquide. La condensation permet de céder de l'énergie thermique à la source froide.

Le liquide doit alors retourner à l'évaporateur. Pour ce faire, le caloduc peut être orienté de manière que le retour du liquide à l'évaporateur résulte de la force de gravité. Néanmoins, il en résulte que l'agencement du caloduc est grandement limité par son orientation vis-à-vis de la gravité. Alternativement, il peut être prévu un pompage par le biais de forces de capillarité grâce à des structures (poreuses, rainurées, grilles, etc.). Toutefois, dans ce cas, le fonctionnement du caloduc dépend du bon fonctionnement de l'élément de pompage ce qui peut nuire à la fiabilité du caloduc.

Il est par ailleurs connu les caloducs oscillants (dit aussi « pulsés »). Ce type de caloduc se présente sous la forme tube en forme de serpentin. Le tube est partiellement rempli d'un liquide diphasique comportant une succession de bulles de vapeur et de bouchons de liquide. Lorsque le caloduc oscillant est chauffé sur une portion et refroidi sur une autre (la portion chauffée étant en communication fluidique avec la portion refroidie), les déclenchements d'ébullition et les écarts de température de saturation résultants génèrent des fluctuations des pressions locales. Ces fluctuations transforment chaque bouchon de liquide en piston qui poussent, en moyenne, les bulles de vapeur vers les zones sous-refroidies. Ce mouvement stochastique est qualifié d'oscillant et permet de transférer la chaleur associée de la zone surchauffée à la zone sous-refroidie. Un caloduc oscillant est ainsi un système passif en ce qu'il ne nécessite pas d'élément mécanique externe pour assurer son fonctionnement. Toutefois, un caloduc oscillant sous forme de serpentin présente l'inconvénient d'être encombrant et peu aisé à agencer dans un système à refroidir. En outre, la fabrication d'un tel caloduc oscillant est couteuse.

CN2770285 divulgue un échangeur de chaleur selon le préambule de la revendication 1.

La présente description a notamment pour but d'apporter une solution simple, économique et efficace aux problèmes mentionnés ci-dessus, permettant d'éviter les inconvénients de la technique connue.

### Résumé

Il est proposé un échangeur de chaleur comprenant :
- un corps définissant un volume intérieur hermétique de l'extérieur et contenant une quantité déterminée d'un fluide de travail diphasique, le corps comprenant un premier collecteur au niveau d'une première extrémité et un second collecteur au niveau d'une seconde extrémité ;
- au moins une cloison interne agencée dans le corps pour former au moins deux canaux internes dans le corps, chaque canal interne étant en communication fluidique avec le premier collecteur d'une part et avec le second collecteur d'autre part ;

l'échangeur comprenant au moins une première partie et une deuxième partie, le corps étant destiné à être couplé thermiquement à une source froide au niveau de la première partie et une source chaude au niveau de la deuxième partie, la première partie et la deuxième partie étant reliées l'une à l'autre par au moins une partie coudée formant un angle de cintrage entre la première partie et la deuxième partie ; et
dans lequel chaque canal interne présente une section dont les dimensions sont adaptées pour que le fluide de travail contenu dans le canal interne présente un nombre d'Eötvös Eo inférieur ou égal à 2 avec Eo=(Δρ*g*Dh²)/σ où
Δρ est la différence de masse volumique entre le fluide de travail à l'état liquide et le fluide de travail à l'état vapeur ;
g est l'accélération de pesanteur ou l'accélération d'un véhicule sur lequel est monté l'échangeur; Dh est le diamètre hydraulique du canal interne ; et
σ est la tension superficielle.
De manière surprenante, en raison de la forme coudée des canaux internes et des dimensions des canaux internes, l'échangeur de chaleur présente un fonctionnement dynamique entre un premier mode de fonctionnement dit « caloduc classique » et un second mode de fonctionnement dit « caloduc oscillant » selon l'inclinaison de la première partie par rapport à la direction du champ de pesanteur.

La première partie et/ou la deuxième partie peuvent être chacune droites. La première partie peut s'étendre de manière rectiligne depuis la première extrémité selon une première direction longitudinale et/ou la deuxième partie peut s'étendre de manière rectiligne depuis la première extrémité selon une deuxième direction longitudinale.

Il est défini un premier angle (α) qui correspond à l'angle formé entre la première direction longitudinale et la direction du champ de pesanteur terrestre. Le premier angle est égal à 0° lorsque la première direction longitudinale coïncide avec la direction du champ de pesanteur et lorsque la première extrémité du corps est située verticalement au-dessous par rapport à la seconde extrémité. A l'inverse, le premier angle est égal à 180° lorsque la première direction longitudinale coïncide avec la direction du champ de pesanteur et lorsque la première extrémité du corps est située verticalement au-dessus par rapport à la seconde extrémité.

De manière similaire, Il est défini un deuxième angle (β) qui correspond à l'angle formé entre la deuxième direction longitudinale et la direction du champ de pesanteur terrestre. Le deuxième angle est égal à 0° lorsque la deuxième direction longitudinale coïncide avec la direction du champ de pesanteur et lorsque la seconde extrémité du corps est située verticalement au-dessous de la première extrémité. A l'inverse, le deuxième angle est égal à 180° lorsque la deuxième direction longitudinale coïncide avec la direction du champ de pesanteur et lorsque la seconde extrémité du corps est située verticalement au-dessus de la première extrémité.

Selon une première configuration dans laquelle le premier angle est compris entre 90° et 180° (bornes incluses) et le deuxième angle est compris entre 0° et 90° (bornes incluses), l'échangeur de chaleur fonctionne selon un premier mode dans lequel la circulation dans chaque canal interne du fluide de travail sous forme liquide depuis la première partie vers la deuxième partie résulte de la force de gravité.

Selon une deuxième configuration dans laquelle le premier angle est compris entre 0° (borne inclus) et 90° (borne excluse) et le deuxième angle est compris entre -90° et 0°(bornes incluses), l'échangeur de chaleur fonctionne selon un second mode dit « oscillant » (« Pulsating Heat Pipe » ou « Oscillating Heat Pipe » en anglais, communément nommé par l'acronyme PHP ou OHP) dans lequel la circulation du fluide de travail dans chaque canal interne s'opère selon un mouvement oscillatoire d'une succession de bulles de vapeur et de bouchons de liquide. Le mouvement oscillatoire résulte principalement des forces de tension superficielle entre le liquide de travail sous forme liquide et sous forme vapeur et des déclenchements d'ébullition créant des écarts de température de saturation qui génèrent des fluctuations locales de pressions dans le fluide. Le fonctionnement de l'échangeur de chaleur selon le second mode est d'autant plus surprenant que les caloducs oscillants connus se présentent généralement sous la forme d'une boucle fermée unique en forme de serpentin partiellement rempli d'un fluide caloporteur alors que l'échangeur de chaleur comprend ici une pluralité de canaux internes, chacun étant en communication fluidique avec un premier collecteur et un second collecteur.

Un tel échangeur de chaleur présente donc l'avantage de fonctionner, i.e. effectuer un échange de chaleur entre la source froide et la source chaude par la circulation du fluide de travail diphasique à l'intérieur du corps, pour une large plage d'inclinaisons de la première partie de l'échangeur par rapport au champ de pesanteur terrestre. Notamment, le fluide de travail sous forme liquide généré dans la première partie (notamment au niveau de la source froide) circule vers la deuxième partie (i.e. vers la source chaude) même lorsque la première partie est agencée avec la première extrémité vers le bas (i.e. lorsque le premier angle compris entre 0° et 90°) et bien que la force de gravité s'oppose à la circulation dans ce sens du fluide de travail sous forme liquide i.e. en fonctionnement antigravitaire. De plus, l'échangeur est dépourvu d'élément de pompage (pompe, structure poreuse, etc.) et de pièces mobiles, ce qui le rend fiable et économique.

En conséquence de quoi, l'échangeur de chaleur présente l'avantage de pouvoir être agencé aisément dans des systèmes à refroidir puisque les contraintes quant à l'inclinaison de la première partie de l'échangeur sont réduites, mais aussi de pouvoir être agencé dans des systèmes à refroidir mobiles dont l'orientation vis-à-vis du champ d'accélération est variable.

Aussi, il a été observé l'échangeur de chaleur présente des performances similaires à celles d'un caloduc « classique » lorsqu'il fonctionne selon le premier mode de fonctionnement (résistance thermique mesurée de l'ordre de 0,16 et 0,3 K/W). Par ailleurs, l'échangeur de chaleur présente aussi des performances satisfaisantes lorsqu'il fonctionne selon le second mode de fonctionnement (résistance thermique mesurée de l'ordre de 0,3 et 0,6 K/W).

L'échangeur de chaleur peut comprendre entre six et vingt-quatre canaux internes. Il n'est pas exclu que l'échangeur puisse comprendre moins de neuf ou plus de douze canaux internes.

Le fluide de travail contenu dans le corps hermétique peut être à saturation. Le fluide de travail présente une température de saturation qui fixe la pression dans le système. La température de saturation est comprise entre la température de la source froide et une température maximale admissible de la source chaude. Par exemple, la température de saturation peut être comprise entre -50°C et +200°C. Par exemple, la pression de saturation peut être comprise entre 0.3 kPa et 2000 kPa. La température et la pression du fluide de travail peuvent être amenées à varier dans l'espace au sein du corps et dans le temps, notamment lors du fonctionnement selon le second mode de fonctionnement. Il peut donc être défini une température de saturation moyenne et une pression de saturation moyenne. La masse volumique du fluide de travail peut être déterminée à une pression et une température correspondant à la pression de saturation moyenne et la température de saturation moyenne.

Le fluide de travail peut être un fluide caloporteur, notamment du trans-1-Chloro-3,3,3-trifluoropropene (R1233zd(E)) qui présente l'avantage d'être diélectrique et non-inflammable. Il n'est pas exclu que d'autres fluides caloporteurs puissent être employés. De manière non exhaustive, le fluide de travail peut aussi être de l'eau, du R1336mzz, du méthanol, de l'acétone, du toluène, du HFE7200 ou du HFE7500. Le taux de remplissage du corps en fluide de travail peut être compris entre 20% et 80%.

Chaque canal peut présenter une section ayant une forme de rectangle. Le diamètre hydraulique de chaque canal interne peut être inférieur ou égal à 6mm, de préférence inférieur ou égale à 1,8 mm dans le cas du R1233zd(E). De manière non exhaustive, chaque canal interne peut aussi présenter une section ayant une forme de carrée, de losange, d'ovale, de cercle, de lune, ou de croissant. Selon un cas particulier, chaque canal interne peut présenter une section ayant une première partie de forme circulaire et une seconde partie en forme de rectangle ou de losange.

Selon des termes équivalents, la première partie peut former, en tout ou partie, un condenseur et la deuxième partie peut former un évaporateur.

L'angle de cintrage θ formé entre la première partie et la deuxième partie peut être supérieur ou égal à 90°. Un tel échangeur de chaleur est ainsi plus compact. Autrement dit, l'encombrement de l'échangeur est réduit. Ainsi, l'intégration de l'échangeur de chaleur dans un système à refroidir est plus aisée. L'angle de cintrage peut coïncider avec un angle formé entre la première direction longitudinale et la deuxième direction longitudinale. Il peut être définit un rayon de cintrage de la partie coudée, celui-ci étant supérieur à un rayon de cintrage minimale de manière à éviter une déformation trop importante du corps qui pourrait nuire à sa durabilité.

Le corps peut comprendre une première paroi principale et une seconde paroi principale en vis-à-vis l'une de l'autre selon une première direction transversale, la première paroi principale et la seconde paroi principale étant reliées par deux parois latérales écartées l'une de l'autre selon une deuxième direction transversale de sorte que le corps présente un profil allongé dans la deuxième direction transversale. Le corps présente ainsi une forme qui permet de loger aisément l'échangeur de chaleur à l'intérieur d'un système à refroidir, notamment entre deux éléments lorsque celui-ci comprend une série d'éléments à refroidir disposés les uns après les autres. L'échangeur de chaleur permet alors un refroidissement plus local et donc plus efficace. Par exemple, l'échangeur de chaleur peut être adapté pour être intercalé entre deux cellules 100 adjacentes d'une batterie de véhicule. Les deux parois latérales peuvent être arrondies. Cela permet de faciliter la fabrication par extrusion du corps. La première paroi principale et/ou la seconde paroi principale peuvent être thermiquement couplées à la source froide au niveau de la première partie de l'échangeur. La première paroi principale et/ou la seconde paroi principale peuvent être thermiquement couplées à la source chaude au niveau de la deuxième partie de l'échangeur.

La première paroi principale et la seconde paroi principale peuvent être sensiblement planes. La première direction transversale et la deuxième direction transversale peuvent être perpendiculaires l'une à par rapport à l'autre. La première direction transversale et la deuxième direction transversale peuvent être perpendiculaires à la direction d'extension principale du corps. En d'autres termes, la première direction transversale et la deuxième direction transversale peuvent être perpendiculaires par rapport à la première direction longitudinale au niveau de la première partie de l'échangeur et perpendiculaires par rapport à la deuxième direction longitudinale au niveau de la deuxième partie de l'échangeur.

Alternativement, la première paroi principale et la seconde paroi principale peuvent être sensiblement arrondies autour d'un axe s'étendant selon la direction d'extension principale du corps. Un tel échangeur peut ainsi être disposé autour d'un système à refroidir, de forme cylindrique comme des cellules de batterie cylindrique par exemple. La première paroi principale et la seconde paroi principale peuvent être sensiblement arrondies respectivement autour d'un axe s'étendant selon la première direction au niveau de la première partie de l'échangeur et selon la deuxième direction au niveau de la deuxième partie de l'échangeur. Dans ce cas, la première direction transversale peut coïncider avec une direction radiale par rapport à l'axe s'étendant selon la direction principale d'extension de l'échangeur. Aussi, la deuxième direction transversale peut coïncider avec une direction circonférentielle par rapport à l'axe s'étendant selon la direction principale d'extension de l'échangeur. La courbure de la première paroi principale et la seconde paroi principale peut être limitée à une zone déterminée du corps, qui peut être par exemple limité au condenseur. Selon un exemple particulier, la première paroi principale et la seconde paroi principale peuvent être arrondies autour d'un axe s'étendant selon la direction d'extension principale du corps de sorte à présenter une section en forme de cercle. Les canaux internes étant alors agencés dans un espace annulaire formé entre la première paroi principale et la seconde paroi principale.

Au niveau de chaque canal interne, la première paroi principale et la seconde paroi principale peuvent être écartées l'une de l'autre selon la première direction transversale selon une première distance inférieure ou égale à 2,5 mm avec une tolérance de 0,15 mm. En d'autres termes, l'échangeur de chaleur peut présenter une épaisseur inférieure ou égale à 2,5 mm avec une tolérance de 0,15 mm. L'échangeur présente donc avantageusement une faible épaisseur.

Chaque cloison interne peut comprendre une première extrémité et une seconde extrémité selon la première direction transversale. La première extrémité et la seconde extrémité de chaque cloison interne peuvent être respectivement reliées à la première paroi principale et la seconde paroi principale. Chaque cloison interne peut présenter une dimension selon la première direction transversale qui coïncide avec la distance qui sépare la première paroi principale et la seconde paroi principale. Chaque cloison interne peut être venue de matière avec la première paroi principale et/ou la seconde paroi principale.

La première paroi principale et la seconde paroi principale peuvent être jointives au niveau de la première extrémité du corps et de la seconde extrémité du corps de manière obturer de manière étanche le corps. La première paroi principale et la seconde paroi principale peuvent être déformées, par exemple par queusotage ou poinçonnage, de manière à être amenées en appui l'une sur l'autre dans la première direction transversale. La distance selon la première direction transversale qui sépare la première paroi principale et la seconde paroi principale peut varier entre 0 et la première distance au niveau d'au moins une partie de chacun des collecteurs.

Le premier collecteur et le second collecteur peuvent être réalisés par un usinage des cloisons internes de manière à les raccourcir au niveau de chaque extrémité du corps et ainsi former un espace (i.e. le collecteur) au niveau chaque extrémité du corps avec lequel communique tous les canaux internes.

La première paroi principale et la seconde paroi principale peuvent être solidarisées l'une à l'autre au niveau de la première extrémité du corps et de la seconde extrémité du corps, notamment par une soudure. Il peut s'agir par exemple d'une soudure par ultrasons ou d'une soudure TIG. Alternativement, l'échangeur peut comprendre un capuchon recouvrant la première paroi principale et la seconde paroi principale au niveau de la première extrémité du corps et de la seconde extrémité du corps et solidarisé à la première paroi principale et/ou la seconde paroi principale. Le système peut être réalisé par fabrication additive dans son entièreté ou simplement au niveau des capuchons.

Les canaux internes peuvent être agencés les uns après les autres dans la deuxième direction transversale.

La première paroi principale et la seconde paroi principale peuvent présenter, au moins au niveau de la deuxième partie de l'échangeur, respectivement un premier coefficient de conduction thermique et un deuxième coefficient de conduction thermique différents l'un de l'autre. Cela favorise un déclenchement local de l'ébullition au niveau de la paroi qui présente le coefficient de conduction thermique le plus élevé ce qui permet de faciliter la première mise en mouvement du fluide de travail au sein du corps, même en présence d'un faible flux de densité thermique issue de la source chaude.

Dans un cas particulier, la première paroi principale et/ou la seconde paroi principale peuvent comprendre une bande s'étendant respectivement selon la première direction longitudinale et la deuxième direction longitudinale pour chaque partie du corps et au niveau desquelles elles présentent respectivement le premier coefficient de conduction thermique et le deuxième coefficient thermique.

Chaque cloison interne peut présenter au moins en partie un troisième coefficient de conduction thermique qui peut être compris entre le premier coefficient de conduction thermique et le deuxième coefficient de conduction thermique. Notamment, le troisième coefficient de conduction thermique peut être égal au premier coefficient de conduction thermique ou au deuxième coefficient de conduction thermique. Alternativement, chaque cloison interne peut présenter au moins une portion dont la résistance thermique est supérieure à la résistance thermique de la première paroi principale et de la seconde paroi principale. En augmentant localement la résistance thermique entre les deux parois principales, la mise en mouvement du fluide de travail est encore facilitée. Aussi, chaque cloison interne peut être réalisée dans le même matériau que les parois principales afin de conserver les mêmes propriétés. L'augmentation local de résistance thermique peut être obtenue par un degré de frittage différent. La portion de cloison présentant une résistance thermique supérieure peut être poreuse (sans pour autant permettre une connexion hydraulique significative entre les canaux).

Selon une alternative, chaque cloison interne peut comprendre une première portion et une deuxième portion disposées l'une après l'autre dans la première direction transversale, la première portion étant adjacente à la première paroi principale et la deuxième portion étant adjacente à la seconde paroi principale. La première portion de chaque cloison interne peut présenter le premier coefficient de conduction thermique et la deuxième portion de chaque cloison interne peut présenter le deuxième coefficient de conduction thermique. Dans un cas particulier, la première portion et la deuxième portion de chaque cloison interne peuvent s'étendre dans la première direction transversale selon une dimension relative égale à 50% de la dimension de la cloison interne selon la première direction transversale.

La première paroi principale, la seconde paroi principale et/ou chaque cloison interne peuvent être réalisées dans un même matériau préférentiellement conducteur. Cela peut être en aluminium ou en cuivre. En effet, l'aluminium est un matériau peu onéreux qui présente un bon coefficient de conduction thermique. L'échangeur de chaleur peut être ainsi réalisé par un procédé d'extrusion d'un profilé.

Alternativement, la première paroi principale, la seconde paroi principale et/ou chaque cloison interne peuvent être réalisées dans des matériaux différents. Par exemple, la première paroi principale et la seconde paroi principale peuvent être réalisées dans un premier matériau et chaque cloison interne peut être réalisée dans un second matériau. Selon un autre exemple, la première paroi principale et chaque cloison interne peuvent être réalisées dans un premier matériau et la seconde paroi principale peut être réalisée dans un second matériau. L'échangeur de chaleur peut être fabriqué par fabrication additive ou par assemblage par fusion. En outre, la première paroi principale, la seconde paroi principale et/ou chaque cloison interne peuvent comprendre un revêtement, notamment adapter pour modifier le coefficient de conduction thermique localement.

Au moins un canal interne peut comporter, au moins au niveau de la deuxième partie de l'échangeur, au moins deux sous-canaux, de préférence au niveau d'une portion de la deuxième partie de l'échangeur qui est couplée thermiquement à la source chaude. Il a été constaté qu'un accroissement du nombre de canaux au niveau de la deuxième partie par rapport à la première partie permet d'améliorer les performances de l'échangeur en diminuant le diamètre hydraulique et en accroissant la surface d'échange interne. Selon un cas particulier, chaque canal interne comporte au moins deux sous-canaux.

L'échangeur peut comprendre en outre au moins une ailette s'étendant depuis une face externe du corps au niveau de la première partie, l'échangeur comprenant de préférence une pluralité d'ailettes s'étendant depuis ladite face externe du corps. L'échangeur peut comprendre une pluralité d'ailettes s'étendant depuis une face externe de la première paroi principale du corps au niveau de la première partie et/ou depuis une face externe de la seconde paroi principale du corps au niveau de la première partie.

Selon une alternative, l'échangeur peut comprendre une partie intermédiaire. L'échangeur peut comprendre une première partie coudée reliant la première partie à la partie intermédiaire et une deuxième partie coudée reliant la deuxième partie à la partie intermédiaire. Par exemple, l'angle formé par chaque partie coudée peut être égal à 90°. La partie intermédiaire peut donc s'étendre perpendiculairement à la première partie et la deuxième partie. Autrement dit, la première partie et la deuxième partie peuvent s'étendre parallèlement l'une à l'autre. Cette configuration en « L » peut-être généralisée pour former des systèmes en « T » ou en « X ».

Le corps peut comprendre au moins une première pièce et une deuxième pièce rapportées l'une à l'autre, chaque canal interne étant agencé à l'intérieur de la première pièce et le premier collecteur est formé par la deuxième pièce.

Selon un autre aspect, il est proposé une batterie comprenant au moins deux cellules et l'échangeur de chaleur tel que décrit ci-avant, la deuxième partie de l'échangeur de chaleur étant intercalée entre les deux cellules. Il peut s'agir d'une batterie de véhicule. L'échangeur de chaleur peut être intégré sur les quatre faces d'un profilé extrudé unique de façon à former un boitier diphasique d'un seul tenant.

### Brève description des dessins

D'autres caractéristiques, détails et avantages apparaîtront à la lecture de la description détaillée ci-après, et à l'analyse des dessins annexés, sur lesquels :
Figure 1 représente une vue en perspective d'un échangeur selon la présente description ;
Figure 2 représente une vue en coupe transversale de l'échangeur de la figure 1 ;
Figure 3 représente une vue en coupe longitudinale, selon un plan perpendiculaire à une première direction transversale, de deux parties distinctes de l'échangeur de la figure 1 ;
Figure 4 représente une vue en coupe longitudinale, selon un plan perpendiculaire à une deuxième direction transversale, d'une partie d'extrémité de l'échangeur de la figure 1 ;
Figure 5 représente une vue en perspective de l'intégration de l'échangeur de la figure dans un système à refroidir ;
Figure 6 représente une vue en coupe longitudinale, selon un plan perpendiculaire à la deuxième direction transversale, de l'échangeur de la figure 1 ;
Figure 7 représente schématiquement le mode de fonctionnement de l'échangeur de la figure en fonction de son inclinaison par rapport au champ de pesanteur ;
Figure 8 représente une vue en coupe longitudinale, selon un plan perpendiculaire à la deuxième direction transversale, de l'échangeur de la figure 1 selon une variante de réalisation ;
Figure 9 comprend les figures 9a à 9c qui représentent chacune une vue en coupe transversale de l'échangeur de la figure 1 selon d'autres variantes de réalisation ;
Figure 10 représente une vue en coupe longitudinale partielle, selon un plan perpendiculaire à la première direction transversale, de l'échangeur de la figure 1 selon une autre variante de réalisation ;
Figure 11 comprend les figures 11a à 11c qui représentent chacune une vue en coupe transversale partielle de l'échangeur de la figure 1 selon d'autres variantes de réalisation ;
Figure 12 comprend les figures 12a à 12c qui représentent chacune une vue en coupe transversale partielle de l'échangeur de la figure 1 selon d'autres variantes de réalisation ;
Figure 13 représente une vue en perspective de l'échangeur de la figure 1 selon une autre variante de réalisation ;
Figure 14 représente une vue longitudinale partielle de l'échangeur de la figure 1 selon une autre variante de réalisation.

### Description des modes de réalisation

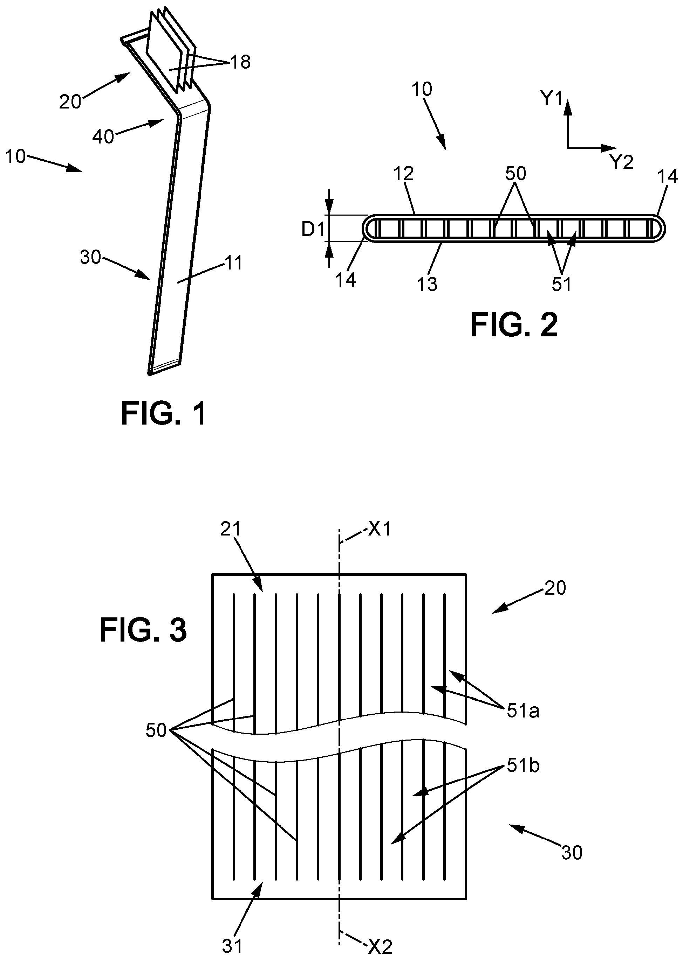

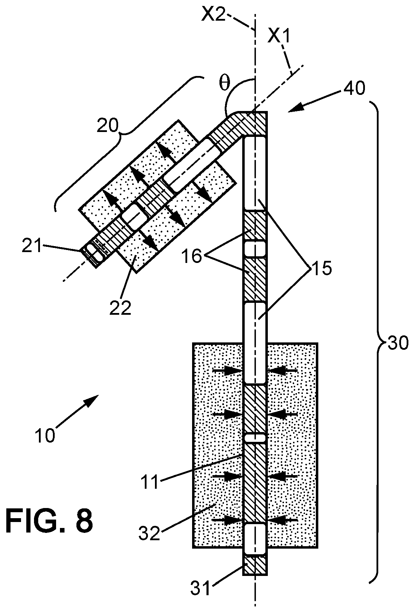

Il est maintenant fait référence aux figures 1 à 7 qui représentent un échangeur de chaleur 10 selon un mode de réalisation préféré. Les figures 8 à 14 représentent des variantes de réalisation du mode de réalisation des figures 1 à 7.

L'échangeur de chaleur 10 comprend tout d'abord un corps 11 définissant un volume intérieur hermétique de l'extérieur et contenant une quantité déterminée d'un fluide de travail diphasique. Le corps 11 comprend une première paroi principale 12 et une seconde paroi principale 13 disposée en vis-à-vis l'une de l'autre selon une première direction transversale Y1. La première paroi principale 12 et la seconde paroi principale 13 sont aussi reliées par deux parois latérales 14 écartées l'une de l'autre selon une deuxième direction transversale Y2 de sorte que le corps 11 présente un profil allongé dans la deuxième direction transversale Y2.

Le corps 11 comprend également un premier collecteur 21 au niveau d'une première extrémité et un second collecteur 31 au niveau d'une seconde extrémité. L'échangeur 10 comprend par ailleurs une pluralité de cloisons internes 50 agencées dans le corps 11 pour former au moins une pluralité de canaux internes 51 dans le corps 11. L'échangeur 10 comporte ici douze canaux internes 51. De préférence, l'échangeur de chaleur 10 comprend entre neuf et douze canaux internes 51. Il n'est pas exclu que l'échangeur 10 puisse comprendre moins de neuf ou plus de douze canaux internes 51. Les canaux internes 51 sont agencés les uns après les autres dans la deuxième direction transversale Y2. Chaque cloison interne 50 comprend une première extrémité et une seconde extrémité selon la première direction transversale Y1 qui sont respectivement reliées à la première paroi principale 12 et la seconde paroi principale 13. Chaque cloison interne 50 est ici venue de matière avec la première paroi principale 12 et la seconde paroi principale 13. Chaque canal interne 51 est en communication fluidique avec le premier collecteur 21 d'une part et avec le second collecteur 31 d'autre part. Autrement dit, chaque canal interne 51 débouche dans chacun du premier collecteur 21 et du second collecteur 31. On comprend donc que le volume intérieur du corps 11 comporte le premier collecteur 21, un volume interne tubulaire définit par chaque canal interne 51 et le second collecteur 31.

Le fluide de travail est un fluide caloporteur, tel que du trans-1-Chloro-3,3,3-trifluoropropene (R1233zd(E)) qui présente l'avantage d'être diélectrique et non-inflammable. Il n'est pas exclu que d'autres fluides caloporteurs puissent être employés. De manière non exhaustive, le fluide de travail peut aussi être de l'eau, du R1336mzz, du méthanol, de l'acétone, du toluène, de l'ethyl lactate, du HFE7200 ou du HFE7500. Le taux de remplissage du corps 11 en fluide de travail peut être compris entre 20% et 80%. Le fluide de travail contenu dans le corps 11 hermétique peut être à saturation. Le fluide de travail peut donc présenter une température de saturation et une pression de saturation. La température de saturation peut être comprise entre la température de la source froide 22 et une température maximale admissible de la source chaude 32. Par exemple, la température de saturation peut être comprise entre -50°C et +200°C. Par exemple, la pression de saturation peut être comprise entre 0.3 kPa et 2000 kPa.

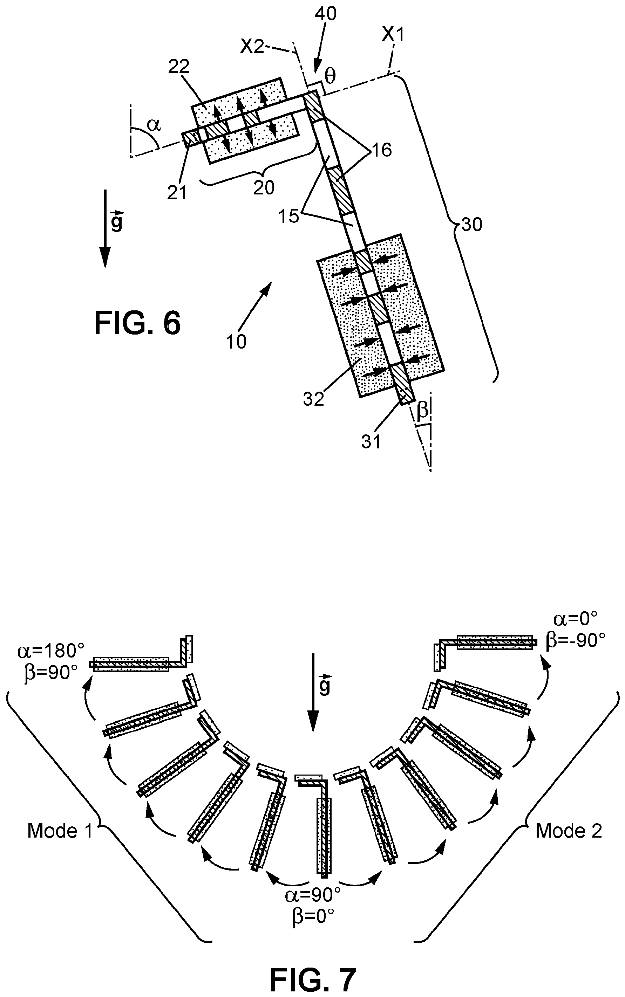

De manière remarquable aux figures 1 et 6, l'échangeur 10 comprend au moins une première partie 20 et une deuxième partie 30. Le corps 11 est destiné à être couplé thermiquement à une source froide 22 au niveau de la première partie 20 et une source chaude 32 au niveau de la deuxième partie 30. L'application et l'extraction de la chaleur peuvent également se faire sur une seule des deux faces actives représentées. Selon des termes équivalents, la première partie 20 forme, ici en partie, un condenseur et la deuxième partie 30 forme, aussi en partie, un évaporateur. La première partie 20 et la deuxième partie 30 sont reliées l'une à l'autre par au moins une partie coudée 40 formant un angle de cintrage θ entre la première partie 20 et la deuxième partie 30. La première partie 20 de l'échangeur 10 comprend donc le premier collecteur 21 et une première partie 51a de chaque canal interne 51. La deuxième partie 30 de l'échangeur 10 comprend le second collecteur 31 et une seconde partie 51b de canal interne 51. Chaque canal interne 51 comprend donc une partie au niveau de la partie coudée 40. En somme, chaque canal interne 51 présente une forme coudée également.

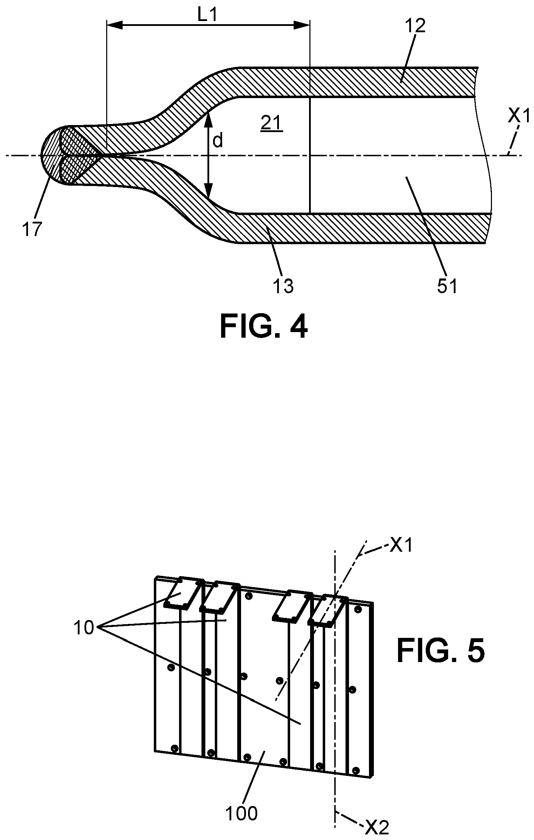

Par exemple, comme représenté à la figure 5, l'échangeur de chaleur 10 est adapté pour être intercalé entre deux cellules 100 adjacentes d'une batterie de véhicule. La deuxième partie 30 de l'échangeur 10 est ici adapté pour être intercalée, voire serrée, entre les cellules 100 de batterie de manière à capter la chaleur émise par celles-ci. La première partie 20 de l'échangeur 10 peut alors être agencée à l'extérieur de la batterie, notamment le long de la batterie, de manière à transférer la chaleur à l'air ambiant ou vers un échangeur à eau de façon à éviter la pénétration de l'eau dans le volume renfermant les batteries. L'échangeur de chaleur 10 permet un refroidissement plus local et donc plus efficace depuis le cœur de la batterie.

Dans l'exemple illustré, la première partie 20 et la deuxième partie 30 sont droites. En d'autres termes, l'échangeur 10 présente une direction principale d'extension au niveau de chacune de la première partie 20 et de la deuxième partie 30. Ainsi, le corps 11 et chaque cloison interne 50 s'étend de manière rectiligne selon une première direction longitudinale X1 au niveau de la première partie 20 de l'échangeur 10 (première direction principale d'extension). De même, le corps 11 et chaque cloison interne 50 s'étend de manière rectiligne selon une deuxième direction longitudinale X2 au niveau de la deuxième partie 30 de l'échangeur 10 (deuxième direction principale d'extension).

L'angle de cintrage θ coïncide donc avec un angle formé entre la première direction longitudinale X1 et la deuxième direction longitudinale X2. Dans l'exemple illustrée aux figures 1 à 7, l'angle de cintrage θ est égal à 90°. En référence à la figure 8, selon une variante, il peut être prévu que l'angle de cintrage θ formé entre la première partie 20 et la deuxième partie 30 soit supérieur à 90°. Un tel échangeur de chaleur 10 est ainsi plus compact. Autrement dit, l'encombrement « au sol » de l'échangeur 10 est réduit. Ainsi, l'intégration de l'échangeur de chaleur 10 dans un système à refroidir est plus aisée. Il peut être définit un rayon de cintrage de la partie coudée 40, celui-ci étant supérieur à un rayon de cintrage minimale de manière à éviter une déformation trop importante du corps 11 qui pourrait nuire à sa durabilité.

Chaque canal interne 51 présente une section (considérée perpendiculairement à la direction d'extension principale de l'échangeur 10) dont les dimensions sont adaptées pour que le fluide de travail contenu dans le canal interne 51 présente un nombre d'Eötvös Eo inférieur ou égal à 2 avec Eo=(Δρ*g*Dh²)/σ où
Δρ est la différence de masse volumique entre le fluide de travail à l'état liquide et le fluide de travail à l'état vapeur ;
g est l'accélération de pesanteur ou l'accélération d'un véhicule sur lequel est monté l'échangeur 10; Dh est le diamètre hydraulique du canal interne 51 ; et
σ est la tension superficielle.

Ainsi, de manière surprenante, en raison de la forme coudée des canaux internes 51 et des dimensions des canaux internes 51, l'échangeur de chaleur 10 présente un fonctionnement dynamique entre un premier mode de fonctionnement dit « caloduc classique » et un second mode de fonctionnement dit « caloduc oscillant » selon l'inclinaison de la première partie 20 par rapport à la direction du champ de pesanteur *̅g̅*̅. Dans le premier mode le liquide s'accumule dans la partie 20 et le système cesse rapidement son fonctionnement nominal.

Comme représenté à la figure 6, il est défini un premier angle α qui correspond à l'angle formé entre la première direction longitudinale X1 et la direction du champ de pesanteur *̅g̅*̅ terrestre. Le premier angle α est égal à 0° lorsque la première direction longitudinale X1 coïncide avec la direction du champ de pesanteur *̅g̅*̅ et lorsque la première extrémité du corps 11 est située en dessous de la seconde extrémité dans la direction verticale (ou en d'autres termes, en position basse). A l'inverse, le premier angle α est égal à 180° lorsque la première direction longitudinale X1 coïncide avec la direction du champ de pesanteur *̅g̅*̅ et lorsque la première extrémité du corps 11 est située au-dessus de la seconde extrémité dans la direction verticale (ou en d'autres termes, en position haute). De manière similaire, Il est défini un deuxième angle β qui correspond à l'angle formé entre la deuxième direction longitudinale X2 et la direction du champ de pesanteur *̅g̅*̅ terrestre. Le deuxième angle β est égal à 0° lorsque la deuxième direction longitudinale X2 coïncide avec la direction du champ de pesanteur *̅g̅*̅ et lorsque la seconde extrémité du corps 11 est située dessous de la première extrémité dans la direction verticale (ou en d'autres termes, en position basse). A l'inverse, le deuxième angle β est égal à 180° lorsque la deuxième direction longitudinale X2 coïncide avec la direction du champ de pesanteur *̅g̅*̅ et lorsque la seconde extrémité du corps 11 est située au-dessus de la première extrémité dans la direction verticale (ou en d'autres termes, en position haute).

Le mode de fonctionnement de l'échangeur 10 selon l'inclinaison de la première partie 20 par rapport à la direction du champ de pesanteur *̅g̅*̅ est représenté à la figure 7. Selon une première configuration dans laquelle le premier angle α est compris entre 90° et 180° (bornes incluses) et le deuxième angle β est compris entre 0° et 90° (bornes incluses), l'échangeur de chaleur 10 fonctionne selon un premier mode (Mode 1) dans lequel la circulation dans chaque canal interne 51 du fluide de travail sous forme liquide depuis la première partie 20 vers la deuxième partie 30 résulte principalement de la force de gravité *̅g̅*̅.

Selon une deuxième configuration dans laquelle le premier angle α est compris entre 0° (borne inclus) et 90° (borne excluse) et le deuxième angle β est compris entre -90° et 0°(bornes incluses), l'échangeur de chaleur 10 fonctionne que selon un second mode (Mode 2) dit « oscillant » (« Pulsating Heat Pipe » ou « Oscillating Heat Pipe » en anglais, communément nommé par l'acronyme PHP ou OHP) dans lequel la circulation du fluide de travail dans chaque canal interne 51 s'opère selon un mouvement oscillatoire d'une succession de bulles de vapeur 15 et de bouchons de liquide 16. Le mouvement oscillatoire résulte principalement des forces de tension superficielle entre le liquide de travail sous forme liquide et sous forme vapeur et des déclenchements d'ébullition créant des écarts de température de saturation ce qui génèrent des fluctuations locales de pressions dans le fluide.

Il n'est pas exclu que l'échangeur 10 fonctionne selon le second mode lorsqu'il est dans la première configuration.

Néanmoins, le fonctionnement de l'échangeur de chaleur 10 selon le second mode est d'autant plus surprenant que les caloducs oscillants connus se présentent généralement sous la forme d'une boucle fermée unique en forme de serpentin partiellement rempli d'un fluide caloporteur alors que l'échangeur de chaleur 10 comprend ici une pluralité de canaux internes 51, chacun étant en communication fluidique avec un premier collecteur 21 et un second collecteur 31.

Par ailleurs, un tel échangeur de chaleur 10 présente donc l'avantage de fonctionner, i.e. effectuer un échange de chaleur entre la source froide 22 et la source chaude 32 par la circulation du fluide de travail diphasique à l'intérieur du corps 11, pour une large plage d'inclinaisons de la première partie 20 de l'échangeur 10 par rapport au champ de pesanteur *̅g̅*̅ terrestre. Notamment, le fluide de travail sous forme liquide généré dans la première partie 20 (notamment au niveau de la source froide 22) circule vers la deuxième partie 30 (i.e. vers la source chaude 32) même lorsque la première partie 20 est agencée avec la première extrémité vers le bas (i.e. lorsque le premier angle α compris entre 0° et 90°) et bien que la force de gravité *̅g̅*̅ s'oppose à la circulation dans ce sens du fluide de travail sous forme liquide. De plus, l'échangeur 10 est dépourvu d'élément de pompage (pompe, structure poreuse, etc.) et de pièces mobiles, ce qui le rend fiable et économique à fabriquer et à mettre en œuvre.

En conséquence de quoi, l'échangeur de chaleur 10 présente l'avantage de pouvoir être agencé aisément dans des systèmes à refroidir puisque les contraintes quant à l'inclinaison de la première partie 20 de l'échangeur 10 sont réduites, mais aussi de pouvoir être agencé dans des systèmes à refroidir mobiles dont l'orientation vis-à-vis du champ de pesanteur *̅g̅*̅ est variable.

Aussi, il a été observé l'échangeur de chaleur 10 présente des performances similaires à celles d'un caloduc « classique » lorsqu'il fonctionne selon le premier mode de fonctionnement (résistance mesurée de l'ordre de 0,16 et 0,3 K/W). Par ailleurs, l'échangeur de chaleur 10 présente aussi de bonnes performances lorsqu'il fonctionne selon le second mode de fonctionnement (résistance mesurée de l'ordre de 0,3 et 0,6 K/W).

La température et la pression du fluide de travail peuvent être amenées à varier dans l'espace au sein du corps 11 et dans le temps, notamment lors du fonctionnement selon le second mode de fonctionnement. Il peut donc être défini une température de saturation moyenne et une pression de saturation moyenne. Les masses volumiques et la tension de surface du fluide de travail prise en compte dans le nombre d'Eötvös Eo peut être déterminée pour une pression et une température correspondant à la pression de saturation moyenne et la température de saturation moyenne.

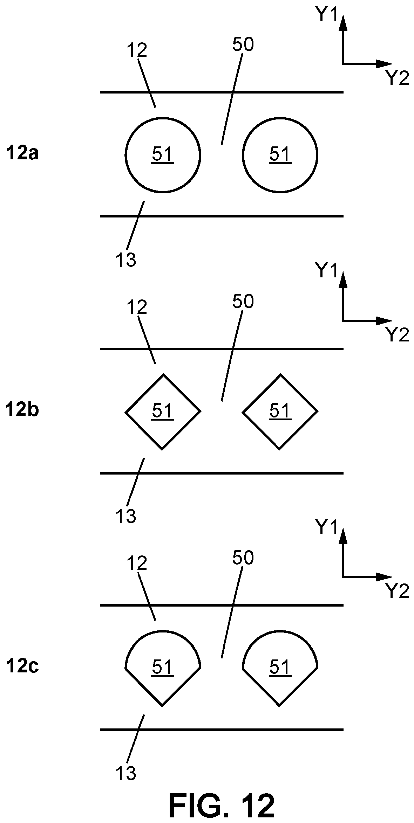

Chaque canal peut présenter une section ayant une forme de rectangle tel que représenté à la figure 2. Le diamètre hydraulique de chaque canal interne 51 peut être inférieur ou égal à 6mm, de préférence inférieur ou égale à 1,8 mm lorsque le fluide de travail est du R1233zd(E). Alternativement, comme visible à la figure 12a, chaque canal interne 51 peut aussi présenter une section ayant une forme de cercle. Selon une autre alternative représentée à la figure 12b, chaque canal interne 51 peut aussi présenter une section ayant une forme de losange. De manière non exhaustive et non représentée, chaque canal interne 51 peut encore présenter une section ayant une forme de carrée, d'ovale, de lune, ou de croissant. Selon un cas particulier représenté à la figure 12c, chaque canal interne 51 peut présenter une section ayant une première partie 20 de forme circulaire (ou semi-circulaire, i.e. dont le bord forme un arc de cercle) et une seconde partie en forme de demi-losange (la forme obtenue est aussi appelée forme « en goutte »). Selon un autre cas particulier non représenté, chaque canal interne 51 peut présenter une section ayant une première partie 20 de forme circulaire (ou semi-circulaire, i.e. dont le bord forme un arc de cercle) et une seconde partie en forme de demi-rectangle (la forme obtenue est aussi appelée forme « tunnel »). Enfin, il n'est pas exclu que deux canaux internes 51 présentent une section respective ayant une forme différente l'une de l'autre.

Comme visible à la figure 2, la première paroi principale 12 et la seconde paroi principale 13 sont ici sensiblement planes. Aussi, la première direction transversale Y1 et la deuxième direction transversale Y2 sont perpendiculaires l'une à par rapport à l'autre. La première direction transversale Y1 et la deuxième direction transversale Y2 sont perpendiculaires à la direction d'extension principale du corps 11. Ainsi, la première direction transversale Y1 et la deuxième direction transversale Y2 sont perpendiculaires par rapport à la première direction longitudinale X1 au niveau de la première partie 20 de l'échangeur 10 et perpendiculaires par rapport à la deuxième direction longitudinale X2 au niveau de la deuxième partie 30 de l'échangeur 10.

Au niveau de chaque canal interne 51, la première paroi principale 12 et la seconde paroi principale 13 sont écartées l'une de l'autre selon la première direction transversale Y1 selon une première distance D1 inférieure ou égale à 2,5 mm avec une tolérance de 0,15 mm. En d'autres termes, l'échangeur de chaleur 10 peut présenter une épaisseur inférieure ou égale à 2,5 mm avec une tolérance de 0,15 mm. L'échangeur 10 présente donc avantageusement une faible épaisseur. Chaque cloison interne 50 peut présenter une dimension selon la première direction transversale Y1 qui coïncide avec la première distance D1 qui sépare la première paroi principale 12 et la seconde paroi principale 13.

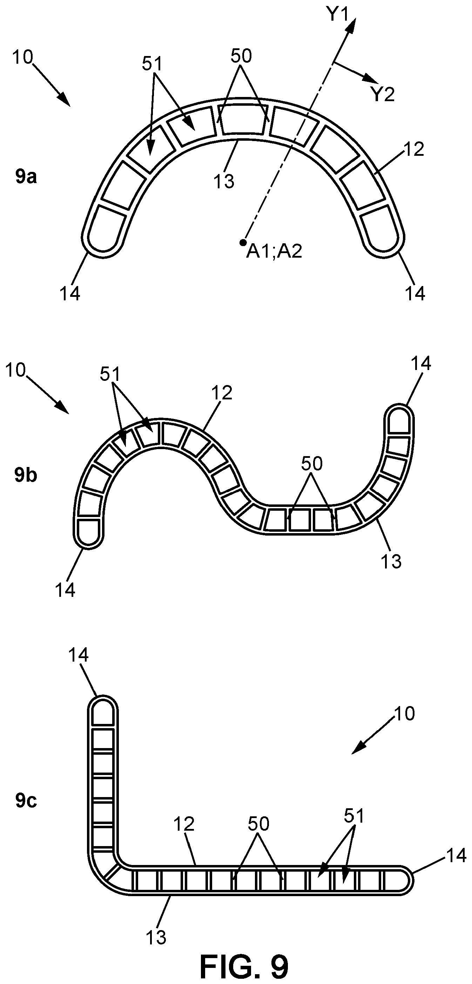

Alternativement, comme représentée à la figure 9a, la première paroi principale 12 et la seconde paroi principale 13 peuvent être sensiblement arrondies autour d'un axe s'étendant selon la direction d'extension principale du corps 11. L'échangeur 10 présente donc en section une forme en arc de cercle autour de sa direction principale d'extension. Un tel échangeur 10 peut ainsi être disposé autour d'un système (e.g. une cellule 100 de batterie) à refroidir de forme cylindrique. En particulier, au niveau de la première partie 20 de l'échangeur 10, la première paroi principale 12 et la seconde paroi principale 13 peuvent être sensiblement arrondies respectivement autour d'un premier axe A1 s'étendant selon la première direction longitudinale X1. De même, au niveau de la deuxième partie 30 de l'échangeur 10, la première paroi principale 12 et la seconde paroi principale 13 peuvent être sensiblement arrondies respectivement autour d'un deuxième axe A2 s'étendant selon la deuxième direction longitudinale X2. Dans ce cas, la première direction transversale Y1 peut coïncider avec une direction radiale par rapport à l'axe s'étendant selon la direction principale d'extension de l'échangeur 10 (i.e. le premier axe A1 au niveau de la première partie 20 et le deuxième axe A2 au niveau de la deuxième partie 30). Aussi, la deuxième direction transversale Y2 peut coïncider avec une direction circonférentielle par rapport à l'axe s'étendant selon la direction principale d'extension de l'échangeur 10 (i.e. le premier axe A1 au niveau de la première partie 20 et le deuxième axe A2 au niveau de la deuxième partie 30).

Selon d'autres variantes de réalisation illustrées aux figure 9b et 9c, la première paroi principale 12 et la seconde paroi principale 13 peuvent chacune présenter en section une forme de double courbure inversée (figure 9b) ou une forme en L (figure 9c).

Il est maintenant plus particulièrement fait référence à la figure 4. De manière remarquable, la première paroi principale 12 et la seconde paroi principale 13 sont jointives au niveau de la première extrémité du corps 11 de manière obturer de manière étanche le corps 11. De manière similaire et non représentée, la première paroi principale 12 et la seconde paroi principale 13 sont jointives au niveau de la seconde extrémité du corps 11 pour obturer de manière étanche le corps 11. Pour ce faire, la première paroi principale 12 et la seconde paroi principale 13 sont ici au niveau de chaque extrémité dans un état déformé, de manière à être amenées en appui l'une sur l'autre dans la première direction transversale Y1. La déformation de la première paroi principale 12 et de la deuxième paroi principale peut par exemple être obtenue par queusotage ou poinçonnage. En conséquence de quoi, la distance selon la première direction transversale Y1 qui sépare la première paroi principale 12 et la seconde paroi principale 13 peut être nulle au niveau de chaque extrémité et augmenter au niveau d'au moins une partie de chacun des collecteurs 21, 31 pour être égale à la première distance D1 et garantir ainsi la bonne connexion hydraulique entre tous les canaux internes 51.

La première paroi principale 12 et la seconde paroi principale 13 sont ici en outre solidarisées l'une à l'autre au niveau de la première extrémité du corps 11 et de la seconde extrémité du corps 11. Dans l'exemple illustré, la première paroi principale 12 et la seconde paroi principale 13 sont solidarisées par une soudure 17. Il peut s'agir par exemple d'une soudure par ultrasons ou d'une soudure TIG. Selon une variante non représentée, l'échangeur 10 peut comprendre un capuchon qui recouvre la première paroi principale 12 et la seconde paroi principale 13 au niveau de la première extrémité du corps 11 et de la seconde extrémité du corps 11 de façon à obturer le volume intérieur du corps 11 au niveau de chaque extrémité. Le capuchon peut en outre être solidarisé à la première paroi principale 12 et/ou la seconde paroi principale 13.

Lors de la fabrication de l'échangeur 10, chaque cloison interne 50 peut initialement s'étendre à l'intérieur du corps 11 depuis la première extrémité jusqu'à la seconde extrémité du corps 11. Le premier collecteur 21 et le second collecteur 31 peuvent ensuite être réalisés par un usinage des cloisons internes 50 sur une longueur L1 au niveau de chaque extrémité du corps 11 et ainsi former un espace (i.e. le collecteur) au niveau chaque extrémité du corps 11 avec lequel communique tous les canaux internes 51.

La première paroi principale 12, la seconde paroi principale 13 et chaque cloison interne 50 peuvent être réalisées dans un même matériau. Cela peut être en aluminium. En effet, l'aluminium est un matériau peu onéreux qui présente un bon coefficient de conduction thermique. L'échangeur de chaleur 10 peut être ainsi réalisé par un procédé d'extrusion de profilé.

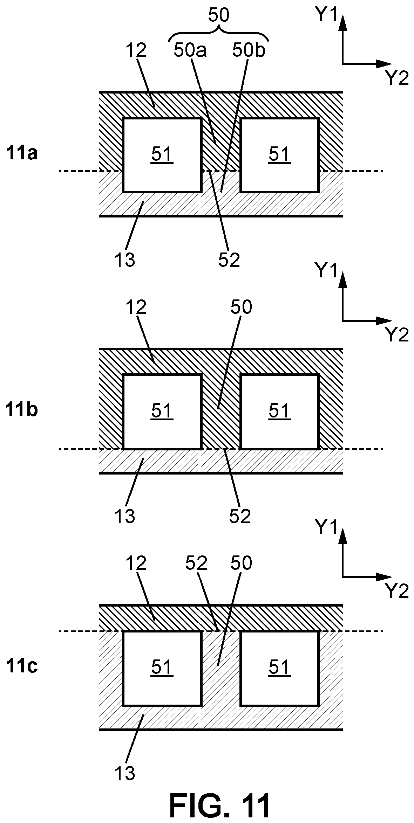

Selon une variante de réalisation, en référence aux figures 11a à 11c, la première paroi principale 12 et la seconde paroi principale 13 présentent, au moins au niveau de la deuxième partie 30 de l'échangeur 10, respectivement un premier coefficient de conduction thermique et un deuxième coefficient de conduction thermique différents l'un de l'autre. Cela favorise un déclenchement local d'ébullition au niveau de la paroi qui présente le coefficient de conduction thermique le plus élevé ce qui permet de faciliter la mise en mouvement du fluide de travail au sein du corps 11, même en présence d'un faible flux de densité thermique issue de la source chaude 32. A cet effet, la première paroi principale 12 et la seconde paroi principale 13 peuvent être réalisées dans des matériaux différents. Selon une alternative non représentée, la première paroi principale 12 et/ou la seconde paroi principale 13 peuvent chacune comprendre une bande s'étendant respectivement selon la première direction longitudinale X1 et la deuxième direction longitudinale X2 au niveau desquelles elles présentent respectivement le premier coefficient de conduction thermique et le deuxième coefficient thermique.

Chaque cloison interne 50 peut également présenter un troisième coefficient de conduction thermique compris entre le premier coefficient de conduction thermique et le deuxième coefficient de conduction thermique. Dans l'exemple de la figure 11b, le troisième coefficient de conduction thermique est égal au premier coefficient de conduction thermique de la première paroi principale 12. Chaque cloison interne 50 peut par exemple être réalisée dans le même matériau que celui dans lequel est réalisée la première paroi principale 12. Dans l'exemple de la figure 11c, le troisième coefficient de conduction thermique est égal au deuxième coefficient de conduction thermique de la seconde paroi principale 13. Chaque cloison interne 50 peut alors être réalisée dans le même matériau que celui dans lequel est réalisée la deuxième paroi principale.

Dans l'exemple de la figure 11a, chaque cloison interne 50 comprend une première portion 50a et une deuxième portion 50b disposées l'une après l'autre dans la première direction transversale Y1, la première portion 50a étant adjacente à la première paroi principale 12 et la deuxième portion 50b étant adjacente à la seconde paroi principale 13. La première portion 50a de chaque cloison interne 50 présente le premier coefficient de conduction thermique et la deuxième portion 50b de chaque cloison interne 50 présente le deuxième coefficient de conduction thermique. La première portion 50a de chaque cloison interne 50 peut être réalisée dans le même matériau que celui dans lequel est réalisé la première paroi principale 12. De même, la deuxième portion 50b de chaque cloison interne 50 peut être réalisée dans le même matériau que celui dans lequel est réalisée la deuxième paroi principale 13. Dans un cas particulier, la première portion 50a et la deuxième portion 50b de chaque cloison interne 50 peuvent par exemple s'étendre dans la première direction transversale Y1 selon une dimension relative égale à 50% de la dimension de la cloison interne 50 selon la première direction transversale Y1. Alternativement encore, la première paroi principale 12, la seconde paroi principale 13 et chaque cloison interne 50 peuvent être réalisées dans des matériaux différents. Un tel échangeur de chaleur 10 peut être fabriqué par fabrication additive ou par assemblage par fusion. En outre, la première paroi principale 12, la seconde paroi principale 13 et/ou chaque cloison interne 50 peuvent aussi comprendre un revêtement, notamment adapter pour modifier le coefficient de conduction thermique localement.

Chaque cloison interne 50 comprend une zone 52 faisant interface entre le premier coefficient de conduction thermique et le deuxième coefficient de conduction thermique. La zone 52 de chaque cloison interne 50 peut présenter une résistance thermique localement plus élevée par rapport à la résistance thermique de la première paroi principale 12 et de la seconde paroi principale 13 de manière à faciliter encore plus la mise en mouvement du fluide de travail dans l'échangeur 10.

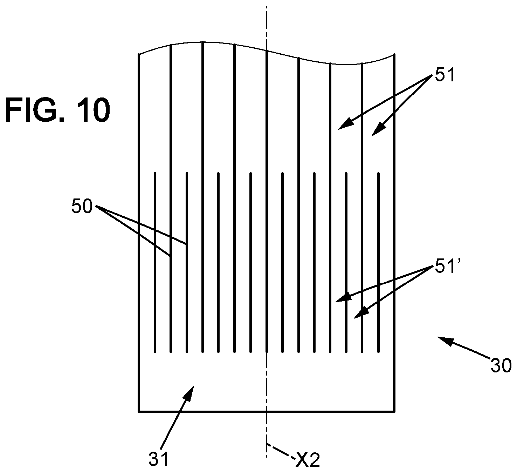

Selon une autre variante de réalisation représentée à la figure 10, chaque canal interne 51 peut comporter, au niveau de la deuxième partie 30 de l'échangeur 10, deux sous-canaux 51', de préférence au niveau d'une portion de la deuxième partie 30 de l'échangeur 10 qui est couplée thermiquement à la source chaude 32. Il a été constaté qu'un accroissement du nombre de canaux au niveau de la deuxième partie 30 par rapport à la première partie 20 permet d'améliorer les performances de l'échangeur 10. Selon une alternative non représentée, un canal peut comporter plus de deux sous-canaux 51'. Selon une autre alternative non-représentée, il peut être prévu que certains canaux internes 51 comportent des sous-canaux 51' au niveau de la deuxième partie 30 de l'échangeur 10 et que d'autres canaux interne 51 soient dépourvus de sous-canaux 51' (i.e. qu'ils ne se sous-divisent pas).

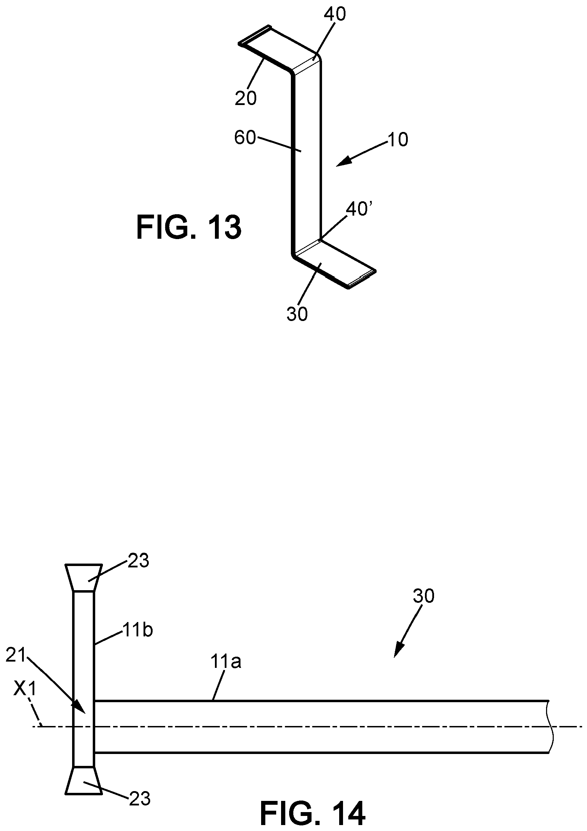

Selon une autre variante de réalisation représentée à la figure 13, l'échangeur 10 comprend une partie intermédiaire 60. L'échangeur 10 comprend une première partie coudée 40 reliant la première partie 20 à la partie intermédiaire 60 et une deuxième partie coudée 40' reliant la deuxième partie 30 à la partie intermédiaire 60. Ici, l'angle formé par chaque partie coudée 40, 40' est égal à 90°. La partie intermédiaire 60 s'étend donc perpendiculairement à la première partie 20 et la deuxième partie 30. Comme déjà mentionné, l'angle formée par chaque partie coudée 40, 40' peut être supérieur à 90°. Aussi, la première partie 20 et la deuxième partie 30 s'étendent parallèlement l'une à l'autre tel qu'un axe s'étendant selon la première direction longitudinale X1 est coplanaire avec un avec axe la deuxième direction longitudinale X2. Alternativement, la première partie 20 et la deuxième partie 30 peuvent s'étendre parallèlement l'une à l'autre tel qu'un axe s'étendant selon la première direction longitudinale X1 ne soit pas coplanaire avec un axe s'étendant selon la deuxième direction longitudinale X2.

Selon une autre variante de réalisation représentée à la figure 14, le corps 11 peut comprendre au moins une première pièce 11a et une deuxième pièce 11b rapportées l'une à l'autre. Chaque canal interne 51 est agencé à l'intérieur de la première pièce 11a. Le premier collecteur 21 est formé par la deuxième pièce 11b. Selon cette variante, un volume intérieur de la première pièce 11a comprend donc le volume interne tubulaire de chaque canal interne 51 et un volume intérieur de la deuxième pièce 11b comprend le premier collecteur 21. La première pièce 11a et la deuxième pièce 11b sont en communication fluidique. La première pièce 11a comprend un premier tube sous forme d'un profilé s'étendant selon la direction principale d'extension de l'échangeur 10. La deuxième pièce 11b comprend un deuxième tube s'étendant perpendiculairement à la première direction longitudinale X1. Chaque extrémité 23 du deuxième tube est obturée, par exemple en étant écrasée et soudée. Un tel agencement permet d'éviter un usinage pour la formation du premier collecteur à l'intérieur d'un profilé. En outre, la deuxième pièce 11b peut former un premier collecteur commun à une pluralité d'échangeur identiques à l'échangeur 10 tel que décrit ci-avant. De manière similaire, le corps peut comporter une troisième pièce formant le deuxième collecteur 31.

## Revendications

1. Echangeur de chaleur (10) comprenant :
- un corps (11) définissant un volume intérieur hermétique de l'extérieur et contenant une quantité déterminée d'un fluide de travail diphasique, le corps (11) comprenant un premier collecteur (21) au niveau d'une première extrémité et un second collecteur (31) au niveau d'une seconde extrémité ;
- au moins une cloison interne (50) agencée dans le corps (11) pour former au moins deux canaux internes (51) dans le corps (11), chaque canal interne (51) étant en communication fluidique avec le premier collecteur (21) d'une part et avec le second collecteur (31) d'autre part ;
l'échangeur (10) comprenant au moins une première partie (20) et une deuxième partie (30), le corps (11) étant destiné à être couplé thermiquement à une source froide (22) au niveau de la première partie (20) et une source chaude (32) au niveau de la deuxième partie (30), la première partie (20) et la deuxième partie (30) étant reliées l'une à l'autre par au moins une partie coudée (40) formant un angle de cintrage (θ) entre la première partie (20) et la deuxième partie (30) ; et **caractérisé en ce que**
dans lequel chaque canal interne (51) présente une section dont les dimensions sont adaptées pour que le fluide de travail contenu dans le canal interne (51) présente un nombre d'Eötvös Eo inférieur ou égal à 2 avec Eo=(Δρ*g*Dₕ²)/σ où
Δρ est la différence de masse volumique entre le fluide de travail à l'état liquide et le fluide de travail à l'état vapeur ;
g est l'accélération de pesanteur ou l'accélération d'un véhicule sur lequel est monté l'échangeur (10);
Dₕ est le diamètre hydraulique du canal interne (51) ; et
σ est la tension superficielle.

2. Echangeur de chaleur (10) selon la revendication précédente, dans lequel l'angle de cintrage (θ) formé entre la première partie (20) et la deuxième partie (30) est supérieur ou égal à 90°.

3. Echangeur de chaleur (10) selon l'une quelconque des revendications précédentes, dans lequel le corps (11) comprend une première paroi principale (12) et une seconde paroi principale (13) en vis-à-vis l'une de l'autre selon une première direction transversale (Y1), la première paroi principale (12) et la seconde paroi principale (13) étant reliées par deux parois latérales (14) écartées l'une de l'autre selon une deuxième direction transversale (Y2) de sorte que le corps (11) présente un profil allongé dans la deuxième direction transversale (Y2).

4. Echangeur de chaleur (10) selon la revendication précédente, dans lequel au niveau de chaque canal interne (51), la première paroi principale (12) et la seconde paroi principale (13) sont écartées l'une de l'autre selon la première direction transversale (Y1) selon une première distance (D1) inférieure ou égale à 2,5 mm avec une tolérance de 0,15 mm.

5. Echangeur de chaleur (10) selon lare revendication 3 ou 4, dans lequel la première paroi principale (12) et la seconde paroi principale (13) sont jointives au niveau de la première extrémité du corps et de la seconde extrémité du corps (11) de manière obturer de manière étanche le corps (11).

6. Echangeur de chaleur (10) selon l'une quelconque des revendications 3 à 5, dans lequel la première paroi principale (12) et la seconde paroi principale (13) présentent, au moins sur une portion de la deuxième partie (30) de l'échangeur (10), respectivement un premier coefficient de conduction thermique et un deuxième coefficient de conduction thermique différents l'un de l'autre.

7. Echangeur de chaleur (10) selon l'une quelconque des revendications précédentes, dans lequel au moins un canal interne (51) comporte, au moins sur une portion de la deuxième partie (30) de l'échangeur (10), au moins deux sous-canaux (51').

8. Echangeur de chaleur (10) selon l'une quelconque des revendications précédentes, dans lequel au moins un canal interne (51) comporte au moins deux sous-canaux (51') au niveau d'une portion de la deuxième partie (30) de l'échangeur (10) qui est couplée thermiquement à la source chaude (32).

9. Echangeur de chaleur (10) selon l'une quelconque des revendications précédentes, l'échangeur (10) comprenant en outre au moins une ailette (18) s'étendant depuis une face externe du corps (11) au niveau de la première partie (20).

10. Echangeur de chaleur (10) selon l'une quelconque des revendications précédentes, l'échangeur (10) comprenant de préférence une pluralité d'ailettes (18) s'étendant depuis ladite face externe du corps (11).

11. Echangeur de chaleur (10) selon l'une quelconque des revendications précédentes, dans lequel le corps (11) comprend au moins une première pièce (11a) et une deuxième pièce (11b) rapportées l'une à l'autre, chaque canal interne (51) étant agencé à l'intérieur de la première pièce (11a) et le premier collecteur (21) est formé par la deuxième pièce (11b).

12. Batterie comprenant au moins deux cellules (100) et l'échangeur de chaleur (10) selon l'une quelconque des revendications précédentes, la deuxième partie (30) de l'échangeur de chaleur (10) étant intercalée entre les deux cellules (100).

## Patentansprüche

1. Wärmetauscher (10), umfassend:
- einen Körper (11), der ein gegenüber der Außenumgebung hermetisch dichtes Innenvolumen definiert und eine bestimmte Menge eines zweiphasigen Arbeitsfluids enthält, wobei der Körper (11) auf Höhe eines ersten Endes einen ersten Sammler (21) und auf Höhe eines zweiten Endes einen zweiten Sammler (31) umfasst;
- mindestens eine innere Trennwand (50), die im Körper (11) angeordnet ist, um mindestens zwei interne Kanäle (51) im Körper (11) zu bilden, wobei jeder interne Kanal (51) einerseits mit dem ersten Sammler (21) und andererseits mit dem zweiten Sammler (31) strömungstechnisch in Verbindung steht;
wobei der Wärmetauscher (10) mindestens einen ersten Teil (20) und einen zweiten Teil (30) umfasst, wobei der Körper (11) dazu bestimmt ist, auf Höhe des ersten Teils (20) thermisch an eine Kältequelle (22) und auf Höhe des zweiten Teils (30) thermisch an eine Wärmequelle (32) gekoppelt zu werden, wobei der erste Teil (20) und der zweite Teil (30) durch mindestens einen gebogenen Teil (40) miteinander verbunden sind, der einen Biegewinkel (8) zwischen dem ersten Teil (20) und dem zweiten Teil (30) bildet; und
**dadurch gekennzeichnet, dass**
jeder interne Kanal (51) einen Querschnitt aufweist, dessen Abmessungen so angepasst sind, dass das in dem internen Kanal (51) enthaltene Arbeitsfluid eine Eötvös-Zahl Eo kleiner oder gleich 2 aufweist, mit Eo=(Δρ*g*Dₕ²)/σ, wobei Δρ der Unterschied der Dichte zwischen dem Arbeitsfluid im flüssigen Zustand und dem Arbeitsfluid im Dampfzustand ist;
g die Erdbeschleunigung oder die Beschleunigung eines Fahrzeugs ist, auf dem der Wärmetauscher (10) montiert ist;
Dₕ der hydraulische Durchmesser des internen Kanals (51) ist; und
σ die Oberflächenspannung ist.

2. Wärmetauscher (10) nach dem vorhergehenden Anspruch, wobei der zwischen dem ersten Teil (20) und dem zweiten Teil (30) gebildete Biegewinkel (8) größer oder gleich 90° ist.

3. Wärmetauscher (10) nach einem der vorhergehenden Ansprüche, wobei der Körper (11) eine erste Hauptwand (12) und eine zweite Hauptwand (13) umfasst, die sich entlang einer ersten Querrichtung (Y1) einander gegenüberliegen, wobei die erste Hauptwand (12) und die zweite Hauptwand (13) durch zwei Seitenwände (14) verbunden sind, die entlang einer zweiten Querrichtung (Y2) voneinander beabstandet sind, so dass der Körper (11) ein in der zweiten Querrichtung (Y2) längliches Profil aufweist.

4. Wärmetauscher (10) nach dem vorhergehenden Anspruch, wobei auf Höhe jedes internen Kanals (51) die erste Hauptwand (12) und die zweite Hauptwand (13) entlang der ersten Querrichtung (Y1) um einen ersten Abstand (D1) voneinander beabstandet sind, der kleiner oder gleich 2,5 mm mit einer Toleranz von 0,15 mm ist.

5. Wärmetauscher (10) nach Anspruch 3 oder 4, wobei die erste Hauptwand (12) und die zweite Hauptwand (13) auf Höhe des ersten Endes des Körpers und des zweiten Endes des Körpers (11) aneinanderliegen, um den Körper (11) auf dichte Weise zu verschließen.

6. Wärmetauscher (10) nach einem der Ansprüche 3 bis 5, wobei die erste Hauptwand (12) und die zweite Hauptwand (13) zumindest über einen Abschnitt des zweiten Teils (30) des Wärmetauschers (10) jeweils einen ersten Wärmeleitkoeffizienten und einen zweiten Wärmeleitkoeffizienten aufweisen, die voneinander verschieden sind.

7. Wärmetauscher (10) nach einem der vorhergehenden Ansprüche, wobei mindestens ein interner Kanal (51) mindestens über einen Abschnitt des zweiten Teils (30) des Wärmetauschers (10) mindestens zwei Unterkanäle (51') aufweist.

8. Wärmetauscher (10) nach einem der vorhergehenden Ansprüche, wobei mindestens ein interner Kanal (51) auf Höhe eines Abschnitts des zweiten Teils (30) des Wärmetauschers (10), der thermisch an die Wärmequelle (32) gekoppelt ist, mindestens zwei Unterkanäle (51') aufweist.

9. Wärmetauscher (10) nach einem der vorhergehenden Ansprüche, wobei der Wärmetauscher (10) ferner mindestens eine Rippe (18) umfasst, die sich von einer Außenfläche des Körpers (11) auf Höhe des ersten Teils (20) erstreckt.

10. Wärmetauscher (10) nach einem der vorhergehenden Ansprüche, wobei der Wärmetauscher (10) vorzugsweise eine Mehrzahl von Rippen (18) umfasst, die sich von der besagten Außenfläche des Körpers (11) erstrecken.

11. Wärmetauscher (10) nach einem der vorhergehenden Ansprüche, wobei der Körper (11) zumindest ein erstes Teil (11a) und ein zweites Teil (11b) umfasst, die aneinander angesetzt sind, wobei jeder interne Kanal (51) innerhalb des ersten Teils (11a) angeordnet ist und der erste Sammler (21) durch das zweite Teil (11b) gebildet wird.

12. Batterie, umfassend zumindest zwei Zellen (100) und den Wärmetauscher (10) nach einem der vorhergehenden Ansprüche, wobei der zweite Teil (30) des Wärmetauschers (10) zwischen den beiden Zellen (100) eingefügt ist.

## Claims

1. Heat exchanger (10) comprising :
- a body (11) defining an interior volume which is hermetically sealed to the outside and contains a determined amount of a two-phase working fluid, the body (11) comprising a first manifold (21) at a first end and a second manifold (31) at a second end;
- at least one internal partition (50) arranged in the body (11) to form at least two internal channels (51) in the body (11), each internal channel (511) being in fluid communication with the first manifold (21) and with the second manifold (31);
the exchanger (10) comprising at least a first part (20) and a second part (30), the body (11) being intended to be thermally coupled to a cold source (22) at the first part (20) and to a hot source (32) at the second part (30), the first part (20) and the second part (30) being connected to each other by at least one elbow part (40) forming a bend angle (θ) between the first part (20) and the second part (30); and
**characterized in that**
wherein each internal channel (51) has a cross-section in which the dimensions are adapted so that the working fluid contained in the internal channel (51) has an Eötvös number Eo that is less than or equal to 2 with Eo=(Δρ*g*Dₕ²)/σ where
Δρ is the difference in density between the working fluid in the liquid state and the working fluid in the vapor state;
g is the gravitational acceleration or the acceleration of a vehicle on which the exchanger (10) is mounted;
Dₕ is the hydraulic diameter of the internal channel (51); and
σ is the surface tension.

2. Heat exchanger (10) according to the preceding claim, wherein the bend angle (θ) formed between the first part (20) and the second part (30) is greater than or equal to 90°.

3. Heat exchanger (10) according to any one of the preceding claims, wherein the body (11) comprises a first main wall (12) and a second main wall (13) which face each other in a first transverse direction (Y1), the first main wall (12) and the second main wall (13) being connected by two side walls (14) spaced apart from each other in a second transverse direction (Y2) such that the body (11) has an elongate profile in the second transverse direction (Y2).

4. Heat exchanger (10) according to the preceding claim, wherein, at each internal channel (51), the first main wall (12) and the second main wall (13) are spaced apart from each other in the first transverse direction (Y1) by a first distance (D1) that is less than or equal to 2.5 mm with a tolerance of 0.15 mm.

5. Heat exchanger (10) according to claim 3 or 4, wherein the first main wall (12) and the second main wall (13) are joined at the first end of the body and at the second end of the body (11) so as to seal the body (11) closed.

6. Heat exchanger (10) according to any one of claims 3 to 5, wherein the first main wall (12) and the second main wall (13) respectively have, in at least a portion of the second part (30) of the exchanger (10), a first thermal conductivity coefficient and a second thermal conductivity coefficient which are different from each other.

7. Heat exchanger (10) according to any one of the preceding claims, wherein at least one internal channel (51) comprises, in at least a portion of the second part (30) of the exchanger (10), at least two sub-channels (51').

8. Heat exchanger (10) according to any one of the preceding claims, wherein at least one internal channel (51) comprises at least two sub-channels (51') in a portion of the second part (30) of the exchanger (10) which is thermally coupled to the hot source (32).

9. Heat exchanger (10) according to any one of the preceding claims, the exchanger (10) further comprising at least one fin (18) extending from an outer face of the body (11) at the first part (20).

10. Heat exchanger (10) according to any one of the preceding claims, the exchanger (10) further comprising a plurality of fins (18) extending from said outer face of the body (11).

11. Heat exchanger (10) according to any one of the preceding claims, wherein the body (11) comprises at least a first piece (11a) and a second piece (11b) which are attached to each other, each internal channel (51) being arranged inside the first piece (11a) and the first manifold (21) being formed by the second piece (11b).

12. Battery comprising at least two cells (100) and the heat exchanger (10) according to any one of the preceding claims, the second part (30) of the heat exchanger (10) being interposed between the two cells (100).
